# EUROPEAN PATENT APPLICATION

(11) **EP 4 835 700 A1**
(43) Date of publication of application: **04.11.2026**
(21) Application number: 25305603.0
(22) Date of filing: 28.04.2025
(51) Int. Cl.: G06F 21/55, G06F 1/28, G06F 11/30, G06F 21/81

(54) **SYSTEM AND METHOD OF DETECTING SECURITY THREAT TO A MICROCONTROLLER USING POWER MANAGEMENT CIRCUITRY**

(71) Applicant: NXP USA, Inc., Austin, TX 78735 (US)
(72) Inventor: McKenna, Daniel, 31023 Toulouse (FR); Hureau, Loic, 31023 Toulouse (FR); McDaid, David, 31023 Toulouse (FR)
(74) Representative: Schwarzweller, Thomas

(57) **Abstract**

A microcontroller system including an MCU and power management circuitry. The power management circuitry includes monitoring circuitry and security circuitry. The monitoring circuitry monitors operating variables associated with the MCU (e.g., current, voltage, time, temperature of the MCU or the power management circuitry, etc.), and stores corresponding active operating variable values over time. The security circuitry determines active operating aspect values each associated with at least one of the monitored operating variables. The security circuitry further compares each of the active operating aspect values with at least one of a corresponding one or more of predetermined operating aspect values stored within a behavior profile for detecting at least one operating anomaly of the MCU. Each predetermined operating aspect value stored in the behavior profile includes at least one threshold value indicative of expected behavior.

## Description

### BACKGROUND

### FIELD

The present disclosure relates in general to microcontroller security, and more particularly to a system and method of detecting and responding to a security threat to a microcontroller using power management circuitry.

### DESCRIPTION OF THE RELATED ART

A microcontroller, also known as a microcontroller unit or MCU, is a computer system with one or more processors, or one or more processing cores, or one or more central processing units (CPUs), etc., or a combination thereof, provided on a single integrated circuit (IC). The microcontroller may also include memory, peripherals, input/output (I/O) devices, etc., in which the particular implementation or configuration depends upon the application. Microcontroller applications may include, for example, industrial applications, automotive applications, commercial applications, etc. The MCU may be provided within a microcontroller system which may include other supporting circuitry, such as power management circuitry and the like. The MCU may be susceptible to security threats or attacks from external sources. Security threats may have one or more goals, such as obtaining secret or encrypted information, modifying operation, halting operation, preventing operation for a ransom, etc., which may include gaining control of a portion up to the entire microcontroller system. A hacker may infiltrate the microcontroller system by causing the MCU to execute unauthorized code or software. Microcontroller designers often incorporate security features and protections designed to thwart or mitigate such security threats. Such security features are typically incorporated on the MCU itself.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a microcontroller system including a microcontroller unit (MCU) and a security power management integrated circuit (PMIC) implemented according to one embodiment.
FIG. 2 is a tabular diagram of the behavior profile of FIG. 1 incorporating predetermined operating aspect information implemented according to one embodiment.
FIG. 3 is a flowchart diagram illustrating operation of test apparatus (not shown) for generating the predetermined operating aspect values that are stored into the behavior profile of FIG. 1.
FIG. 4 is a flowchart diagram illustrating operation of the security PMIC of FIG. 1 for detecting and responding to a security threat to the microcontroller system according to one embodiment.

### DETAILED DESCRIPTION

A microcontroller system according to one aspect includes a microcontroller (MCU) and power management circuitry. The power management circuitry includes monitoring circuitry and security circuitry. The monitoring circuitry is configured to monitor operating variables associated with operating behavior of the MCU including at least one voltage variable, at least one current variable, and at least one temperature variable (e.g., operating current of the MCU, operating voltage of the MCU, operating time, operating temperature of the MCU, and operating temperature of the power management circuitry). The monitoring circuitry is further configured to store corresponding active operating variable values over time. The security circuitry is configured to determine active operating aspect values each associated with at least one of the monitored operating variables, and to compare each of the active operating aspect values with at least one of a corresponding one or more of predetermined operating aspect values stored within a behavior profile for detecting at least one operating anomaly of the MCU.

The active operating aspect values may include an active power level value of the MCU calculated by the security circuitry using at least one voltage variable value and at least one current variable value. The security circuitry may be configured to compare the calculated active power level value with at least one predetermined power level value stored within the behavior profile. The calculated active power level value and the predetermined power level value may each be associated with a selected one of a peak power level value of the MCU, an average power level of the MCU, and an elapsed operating time of the MCU at a specific power level.

The active operating aspect values may include an active versus idle time ratio value of the MCU. In that case, the security circuitry may be configured to compare the active versus idle time ratio value of the MCU with at least one predetermined active versus idle time ratio value stored in the behavior profile.

The security circuitry may be configured to compare an active operating temperature value with at least one predetermined operating temperature value stored in the behavior profile. In that case, the active operating temperature value and the at least one predetermined operating temperature value may each be associated with a selected one of operating temperature of the power management circuitry and operating temperature of the MCU.

The operating variables may include operating current of the MCU, operating voltage of the MCU, operating time, operating temperature of the MCU, and operating temperature of the power management circuitry.

The security circuitry may be configured to perform at least one of the following actions when at least one operating anomaly is detected, including resetting the MCU, disabling security logic of the MCU, switching the microcontroller system to a safe state, and disabling at least one feature the microcontroller system. The predetermined operating aspect values stored within the behavior profile may include at least one predetermined operating aspect threshold value for at least one of the active operating aspect values. In one embodiment, for example, a normal aspect value and maximum deviation aspect value may be included, in which the maximum deviation aspect value represents a maximum threshold relative to the normal aspect value. In another embodiment, one or more threshold aspect values may be included for each aspect value.

The predetermined operating aspect values stored within the behavior profile may include at least one predetermined operating aspect value for each of one or more configurations of the microcontroller system at each of one or more operating modes of the MCU.

The security circuitry may incorporate machine learning circuitry configured to analyze the operating variables over time and to adjust at least one of the plurality of predetermined operating aspect values stored within the behavior profile based on the analysis.

In a second aspect, there is disclosed a method of detecting a security breach by power management circuitry in a microcontroller system including a microcontroller (MCU) and the power management circuitry, including monitoring operating variables associated with operating behavior of the MCU, including at least one voltage variable, at least one current variable, and at least one temperature variable, storing active operating variable values indicative of the monitored active operating variables over time, determining active operating aspect values each associated with at least one of the monitored operating variables, and comparing each of the active operating aspect values with at least one of a corresponding one or more of predetermined operating aspect values stored within a behavior profile for detecting at least one operating anomaly of the MCU.

The method may further comprise: calculating an active power level value of the MCU using at least one voltage variable value and at least one current variable value; and comparing the calculated active power level value with at least one predetermined power level value stored within the behavior profile. The calculated active power level value and the predetermined power level value may be each associated with a selected one of a peak power level value of the MCU, an average power level of the MCU, and an elapsed operating time of the MCU at a specific power level. The method may further comprise: determining operating time of the MCU and elapsed time; determining an active versus idle time ratio value of the MCU; and comparing the determined active versus idle time ratio value of the MCU with at least one predetermined active versus idle time ratio value stored in the behavior profile. The method may further comprise comparing an active operating temperature value with at least one predetermined operating temperature value stored in the behavior profile. The active operating temperature value and the predetermined operating temperature value may be each associated with a selected one of operating temperature of the power management circuitry and operating temperature of the MCU. The method may further comprise performing at least one of the following actions when at least one operating anomaly is detected, including resetting the MCU, disabling security logic of the MCU, switching the microcontroller system to a safe state, and disabling at least one feature the microcontroller system. The plurality of predetermined operating aspect values stored within the behavior profile may include at least one predetermined operating aspect threshold value for at least one of the active operating aspect values. The plurality of predetermined operating aspect values stored within the behavior profile may include at least one predetermined operating aspect value for each of one or more configurations of the microcontroller system at each of one or more operating modes of the MCU.

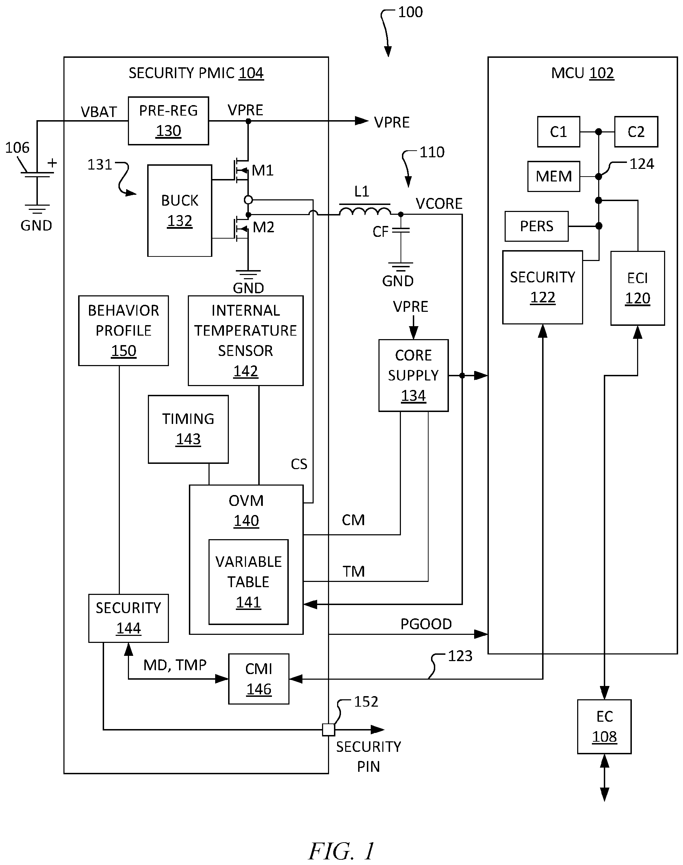

FIG. 1 is a simplified block diagram of a microcontroller system 100 including a microcontroller unit (MCU) 102 and a security power management integrated circuit (PMIC) 104 implemented according to one embodiment. In one embodiment, the microcontroller system 100 is configured for an automotive application, although alternative applications are contemplated (e.g., commercial or industrial applications or the like). The illustrated microcontroller system 100 further includes a battery 106 (e.g., 12 Volt (V) automotive battery, or a 48V battery, or any other input power source referenced to a reference voltage, such as ground (GND)), external communication circuitry (EC) 108 (e.g., a Telematics control unit), and external power devices 110 as further described herein. The MCU 102 may include one or more processing cores (e.g., C1, C2), a memory (MEM), one or more peripherals (PERS), an external communication interface (ECI) 120, and a security module 122 coupled to a bus interface 124 or the like. The external communication interface 120 is coupled to the external communication circuitry 108 for enabling external communications with a remote entity. The particular configuration of the MCU 102, including the number and types of processing cores, the amount of memory, the number and type of peripherals, etc., varies widely depending upon the particular application.

The MCU 102 may include internal security mechanisms, such as security incorporated within the security module 122 or security applications executed by one or more of the processing cores C1 or C2 or any other processing cores or devices that may be included. It is appreciated, however, that such security measures may be attacked and may be compromised. The security PMIC 104 is configured to monitor operating variables of the MCU 102 to determine whether the MCU 102 has been taken over, attacked, or otherwise compromised, which includes, for example, detecting that the MCU 102 is operating unauthorized code. The security PMIC 104 is physically separate and located on a separate IC or chip, so that even when the MCU 102 has been hacked and compromised, the security PMIC 104 operates independently so that any code or software executed by the PMIC 104 is substantially less susceptible to the same type of attack. Also, the PMIC 104 may be implemented as a state machine or the like so there is no code or software that could be compromised. In addition, as further described herein, the security PMIC 104 is configured to monitor one or more operating aspects of the MCU 102 based on the operating variables to detect operating anomalies indicative of an attack. The security PMIC 104 may further be configured to take remedial measures or other actions to stop or thwart the attack or at least minimize damage or prevent access to secure information.

In the illustrated embodiment, the security PMIC 104 includes pre-regulator (PRE-REG) circuitry 130 receiving a battery voltage VBAT developed by the battery 106 for developing a preliminary voltage VPRE. The security PMIC 104 may include a buck power supply 131 including a buck regulator 132 that controls a pair of power switches M1 and M2 coupled to receive VPRE and externally coupled to an inductive device L1 for developing a regulated core voltage VCORE provided to the MCU 102. In this case, the power devices 110 include the inductive device L1 and any other external supporting circuitry, such as, for example, a filter capacitor CF or the like. In an alternative embodiment, VPRE is provided to an external core supply 134 configured to regulate VCORE, in which the power devices 110 include the core supply 134. Upon power-up or reset or restart (POR), the security PMIC 104 initially negates a signal PGOOD provided to the MCU 102 while VCORE is out of regulation and then asserts PGOOD to indicate that VCORE is within regulation voltage limits. It is noted that in alternative configurations, the PMIC 104 may be configured as a low voltage PMIC without a pre-regulator. Also, one or more additional PMICs (not shown) may be included that generate and provide VCORE to the MCU 102.

The security PMIC 104 also includes an operating variable monitor (OVM) 140 configured to monitor the operating variables of the microcontroller system 100, which include operating variables of the MCU 102 and which may further include operating variables of the security PMIC 104 itself. When the buck power supply 131 is included, the OVM 140 is interfaced with a current sensor (not shown) coupled to the buck power supply 131 (e.g., an intermediate node of the power switches M1 and M2) for providing a current sense (CS) signal indicative of operating current of the MCU 102. When the core supply 134 is included, the OVM 140 is interfaced with a current sensor (not shown) that is provided within the core supply 134 to provide a current monitor (CM) signal for monitoring the operating current of the MCU 102. The OVM 140 receives the VCORE voltage for monitoring the operating voltage of the MCU 102. When the MCU 102 includes multiple separate and independent power domains, such as separate supply voltage to each of the cores of the MCU 102, then the OVM 140 may be configured to monitor the power supply voltages of the separate power domains. The MCU current and voltage variables may be used to determine the operating power of the MCU 102.

The OVM 140 is coupled to an internal temperature sensor 142 that measures the internal temperature of the security PMIC 104. When the core supply 134 is included, it may also include an internal temperature sensor (not shown) that provides a temperature monitor TM signal indicative of the ambient temperature and potentially indicative of the MCU temperature. The security PMIC 104 also includes timing circuitry 143 coupled to the OVM 140 for tracking time that may be used for determining operating aspects of the microcontroller system 100 as further described herein. Although not shown in FIG. 1, the OVM 140 may include one or more analog-to-digital converters (ADCs) for converting analog sensor signals to digital values for monitoring the current, voltage, temperature, and time variables.

In one embodiment, the OVM 140 stores monitored variable values into a variable table 141. The variable table 141 may be configured with rows of monitored information in which each row includes a full set of monitored variables for a given time value and for a current operating mode of the MCU 102. For example, each row includes a time value from the timing circuitry 143, at least one current value (from the buck power supply 131 or from the core supply 134), at least one voltage value indicative of VCORE along with other power supply voltages, one or more temperature values (internal PMIC temperature, MCU temperature, core supply temperature (if provided, etc.)), and a corresponding operating mode of the MCU 102 indicated by a mode (MD) value. In one embodiment, the OVM 140 continuously samples new operating variable values and stores in a next row of the variable table 141. The variable table 141 may be configured in a wrap-around manner so when full, that the newest values replace the oldest values. The variable table 141 is shown provided within the OVM 140, but may also be externally provided and externally accessed by the OVM 140.

The security PMIC 104 includes security circuitry 144 which is further coupled to the OVM 140 for evaluating the monitored operating variables from the table 141 during each mode of operation. The PMIC 104 includes a communication interface (CMI) 146 that is further interfaced to the security circuitry 144 of the security PMIC 104 and to the security module 122 of the MCU 102 via an external communication link 123. The communication interface 146, the communication link 123, and the security module 122 may be collectively configured to communicate according to any suitable communication protocol, such as the inter-integrated circuit (I²C) serial communication bus or the serial peripheral interface (SPI) serial communication bus or the like. The communication interface 146 enables communication between the security PMIC 104 and the MCU 102 via the communication link 123, such as enabling the MCU 102 to report its operating mode via the MD value or its internal temperature via a TMP value to the security circuitry 144 along with any other information that may be determined. There may be multiple operating modes of the MCU 102, such as a normal mode or a run mode, a standby mode, a low power mode, a sleep mode, etc. The communication interface 146 also enables the security circuitry 144 to perform external communications with the external communication circuitry 108 such as via the external communication interface 120. External communications may be used to report information including security information, operating information, status information, security breach information, etc., to the external entity, and to receive other information including update information from the external entity.

It is noted that the communication interfaces communicating via the communication link 123 between the PMIC 104 and the MCU 102 and the external communications performed using the external communication circuitry 108 may have additional protection, such as using mutual authentication at startup or payload encryption or any suitable combination thereof.

During operation of the microcontroller system 100, the OVM 140 is configured to periodically sample the monitored operating variables (e.g., current, voltage, temperature, time, mode, etc.) at a selected sample rate corresponding to a selected read time interval and store corresponding values into a row of the table 141. It is noted that the operating variables listed herein are not intended to be an exhaustive list such that other operating variables may be included, such as, for example, clock rates (internal or external), electromagnetic emissions, etc. The read time interval between samples may be fixed or programmable. In order to achieve real-time monitoring for quickly detecting anomalies and responding to actual or potential threats, the read time interval should be sufficiently small, such as less than a millisecond (ms). The timing circuitry 143 may include a counter or the like that continuously updates a register with a time value to indicate the current time. The OVM 140 may sample time values at the same rate as the other monitored operating variables to effectively operate as a timestamp or the like for each set of operating variables.

Although the MD value indicating the operating mode may also be periodically sampled, in one embodiment the MD value remains unmodified until the MCU 102 asynchronously indicates a mode change via the communication link 123 as detected by the communication interface 146. The OVM 140 may be configured to receive the MD value from the security circuitry 144. It is appreciated, however, that if hacked, the MCU 102 may fail to report mode changes or may indicate an incorrect operating mode in an attempt to mislead the microcontroller system 100 including the security PMIC 104.

The security PMIC 104 includes, or has access to, a behavior profile 150 providing predetermined operating aspect information to the security circuitry 144 for purposes of identifying operating anomalies indicative of a security threat or attack. In one embodiment, the security PMIC 104 may include internal memory that internally stores the entire behavior profile 150 or an applicable portion thereof. In another embodiment, the behavior profile 150 is stored in external memory (not shown) accessible by the security circuitry 144 via an external interface (not shown). In one embodiment, for example, the behavior profile 150 may be stored in programmable read-only memory or the like in which the profile information in its entirety or an applicable portion thereof is downloaded into random-access memory (RAM) located within the security circuitry 144.

As described further herein, the security circuitry 144 is configured to evaluate the monitored operating variables from the table 141 during operation for determining multiple "active" operating aspect values (e.g., operating characteristics, properties, attributes) of the microcontroller system 100, in which each active operating aspect is associated with at least one and often a combination of the monitored operating variables while the MCU 102 is running (e.g., executing applications). The security circuitry 144 is configured to compare the determined active operating aspect values with predetermined operating aspect values stored in the behavior profile 150. The security circuitry 144 uses results of the comparisons for determining any operating anomalies of the MCU 102. Such operating anomalies may be indicative, for example, of hacking of the MCU 102 such as when the MCU 102 is executing unauthorized software or code.

When the security circuitry 144 of the security PMIC 104 detects one or more anomalies indicating that the MCU 102 has been hacked or is otherwise compromised, the security circuitry 144 may take any one or more remedial actions to stop the hack or to otherwise minimize damage or exposure of secure information. The security circuitry 144 may be configured to reset the microcontroller system 100. The security circuitry 144 may be configured to disable security logic such as disabling or otherwise limiting access to the security module 122 of the MCU 102. Such disabling of security logic and other actions may be configured to prevent any secured assets, such as security tokens or keys or the like, from being compromised during when an attack is detected. The security circuitry 144 may be configured to communicate with the security module 122 to switch the microcontroller system 100 to a safe or secure state including the MCU 102 and the security PMIC 104. The security circuitry 144 may be configured to reduce functionality of the microcontroller system 100 including disabling one or more functions or features. The security circuitry 144 may be configured to use the external communication circuitry 108 (via the security module 122 and the external communication interface 120) to communicate and report security breach information or the like to an authorized external entity.

In one embodiment, the security PMIC 104 includes an input/output (I/O) security pin 152 that enables the security circuitry 144 to externally indicate to other devices (not shown) of the microcontroller system 100 that the MCU 102 is no longer considered to be in a secure state. The other devices may be configured or otherwise programmed to respond accordingly to thwart an attack or minimize exposure or damage. Although the security circuitry 144 may assert a relatively simple binary signal on the security pin 152, such as at a first state during normal operation and switched to a second state to indicate a security hack, such a simple configuration may itself be hacked and easy to falsify. Instead, in one embodiment the security circuitry 144 may assert specific signal patterns or the like on the security pin 152 to indicate secure versus non-secure status. More specifically, for example, the security circuitry 144 may assert periodic timed pulses, such as a heartbeat signal or the like, during normal operation to indicate a secure state, and either modify or terminate the pulses to indicate a non-secure state.

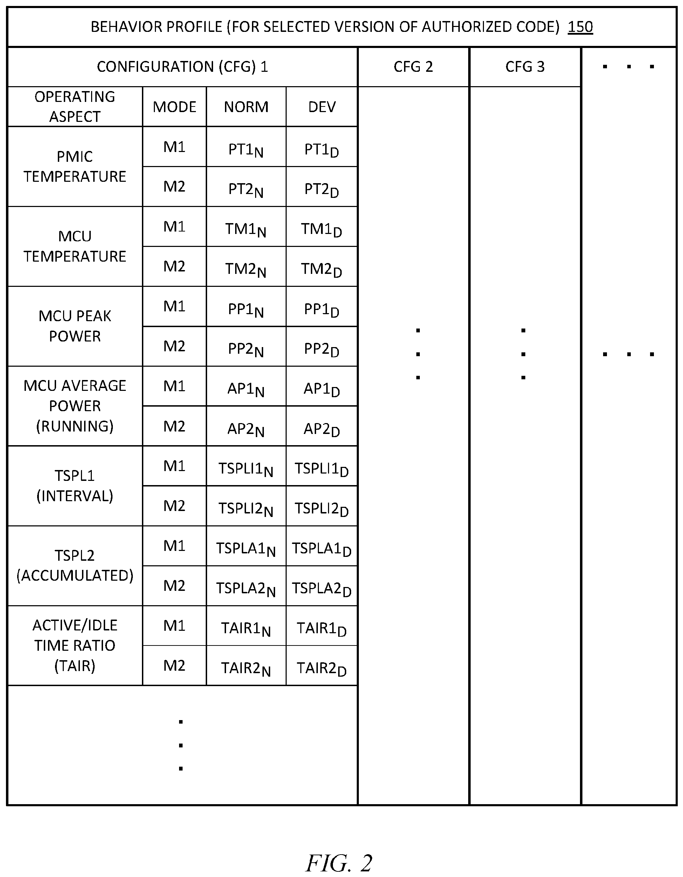

FIG. 2 is a tabular diagram of the behavior profile 150 incorporating predetermined operating aspect information implemented according to one embodiment. The behavior profile 150 includes a list of predetermined operating aspect values for each of one or more configurations, in which each predetermined operating aspect value is associated with at least one of the monitored operating variables. In the illustrated embodiment, for each predetermined operating aspect value for a given configuration, an expected normal aspect value and an expected deviation aspect value relative to the normal aspect value is provided for each of one or more operating modes. The expected deviation aspect value may represent a maximum deviation threshold relative to the normal aspect value. In an alternative embodiment, one or more predetermined aspect thresholds may be included, such as a minimum threshold aspect value, a maximum threshold aspect value, or both. The illustrated behavior profile 150 is simplified and includes only two operating modes M1 and M2, where it is understood that any number of operating modes may be defined. For example, M1 may be a normal mode and M2 may be a low power mode, whereas additional operating modes may be included and tested, such as a standby mode, a sleep mode, etc.

The configuration references a particular configuration of the microcontroller system 100, such as, for example, enablement of a selected set of optional parameters or features. In an automotive application, for example, a particular car or truck may be equipped with various performance packages, electronic features (e.g., power steering, electric door locks, electric windows, power seat adjustments, heated seats, entertainment systems, infotainment systems and corresponding power levels, etc.), engine types or sizes with corresponding ignition configurations, body styles or types, etc. The configuration may vary from a basic package to a supreme package and various intermediate configurations in between. The configuration steps from one level to another add one or more features that have the greatest impact on the monitored operating variables (voltage, current, temperature).

One operating aspect may be the PMIC temperature reported by the internal temperature sensor 142. A normal PMIC temperature value PT1_{N} is determined for the first operating mode M1 for a first configuration (CFG) 1, along with a corresponding deviation (DEV) value PT1_{D}. The deviation value PT1_{D} may represent a maximum expected deviation from the normal PMIC temperature value PT1_{N} for the first mode M1 at the first configuration CFG 1. Each maximum expected deviation is configured relative to a normal value for identifying operating anomalies. In a similar manner, a normal PMIC temperature value PT2_{N} is determined for the second operating mode M2 for CFG 1, along with a corresponding maximum expected deviation value PT2_{D}. Additional normal and deviation values may be determined for any additional operating modes. Corresponding PMIC temperature normal and deviation values may be determined for additional configurations CFG 2, CFG 3, etc.

Another operating aspect may be the MCU temperature reported by the MCU 102 via the communication link 123. A normal MCU temperature value TM1_{N} is determined for the first operating mode M1 for CFG 1, along with a corresponding maximum expected deviation value TM1_{D}. In a similar manner, a normal MCU temperature value TM2_{N} is determined for the second operating mode M2 for CFG 1, along with a corresponding maximum expected deviation value TM2_{D}. Additional normal and deviation values may be determined for any additional operating modes. Corresponding MCU temperature normal and deviation values may be determined for additional configurations CFG 2, CFG 3, etc.

Although not included in FIG. 2, operating aspect values may be included for other temperature values for each configuration and operating mode, such as, for example, temperature reported by the core supply 134 or any other temperature sensing from one or more external peripherals (not shown, e.g., external memory devices, ethernet switches, etc.).

Another operating aspect may be MCU peak power. MCU power is determined by multiplying an MCU voltage value (e.g., value of VCORE) by an MCU current value (e.g., current provided by the buck power supply 131 or by the core supply 134) at a given time. Peak power is determined by comparing sequential power values and determining and maintaining a maximum (or peak) power value over time. Normal peak power values PP1_{N} and PP2_{N} and corresponding peak power deviation values PP1_{D} and PP2_{D} are determined for both of the operating modes M1 and M2, respectively, for CFG 1. Corresponding MCU peak power normal and deviation values may be determined for additional configurations CFG 2, CFG 3, etc.

Another operating aspect may be MCU average power. Again, a power value at a given time is determined by multiplying corresponding MCU current and voltage values. Average power is determined by adding a number of power values together and dividing by the number of values. A running MCU average power may be maintained from a selected starting point or for a sliding time window. For example, the MCU average power may be maintained for the last set of power values in which the set has a given size (e.g., the last 10 values, the last 100 values, etc.). Again, normal and deviation MCU average power values may be determined for each of the operating modes for CFG 1. Corresponding MCU average power normal and deviation values may be determined for additional configurations CFG 2, CFG 3, etc.

Another operating aspect may be an elapsed amount of time spent at a specified power level (TSPL). TSPL may be determined during an interval or accumulated over time. Again, for each of the interval and accumulated TSPL aspect values, normal and deviation TSPL values may be determined for each of the operating modes for CFG 1 and other configurations CFG 2, CFG 3, etc.

Another operating aspect may be an active versus idle time ratio (active time divided by idle time), which may be represented as active/idle time ratio shown as TAIR. Again, normal and deviation TAIR values may be determined for each of the operating modes for each of the configurations CFG 1, CFG 2, CFG 3, etc.

The predetermined operating aspects and corresponding values listed in the tabular diagram of the behavior profile 150 are not necessarily exhaustive such that additional active operating aspect values may be defined, tracked, and compared with predetermined operating aspect values. During operation of the microcontroller system 100, the OVM 140 samples and stores the operating variables into the variable table 141, and the security circuitry 144 uses the operating variables stored in the variable table 141 to determine corresponding active operating aspect values, such as one or more temperature values, one or more power values, one or more time values (e.g., TSPL, TAIR, etc.), etc. The security circuitry 144 compares one or more active operating aspect values with corresponding predetermined normal and deviation operating aspect values from the behavior profile 150 for determining any anomalies. For example, if the actual MCU average power determined during operation for a given configuration and given mode deviates from the normal value by more than the corresponding deviation value, then an anomaly is deemed detected. When an anomaly is detected, the security circuitry 144 may take one or more protection or remedial actions or measures as previously described.

The predetermined operating aspects and aspect values may be determined empirically such as by testing or the like or may be based on behavioral models or the like. In each case, it is desired to determine the expected operating ranges of the microcontroller system 100. It is appreciated that alternative predetermined operating aspect values may be determined as used. For example, in the alternative, or in addition, one or more of the predetermined operating aspect values may include one or more threshold values, such as a minimum threshold value, a maximum threshold value, or both. One or more active operating aspect values may be compared with corresponding predetermined minimum and maximum thresholds for detecting operating anomalies.

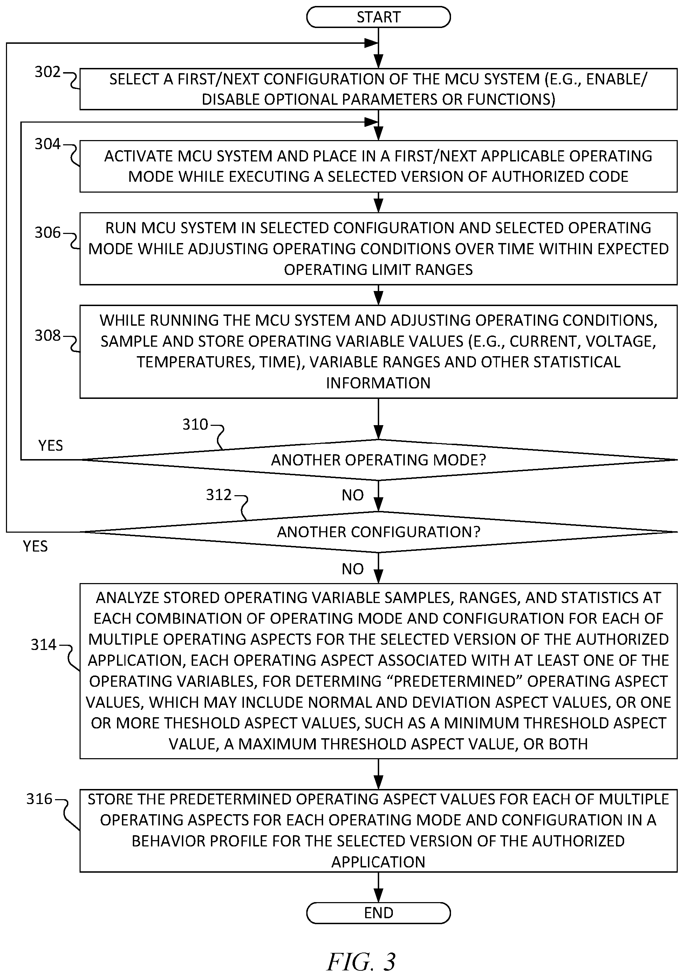

FIG. 3 is a flowchart diagram illustrating operation of test apparatus (not shown) for generating the predetermined operating aspect values that are stored into the behavior profile 150. At a first block 302, a first (or next) configuration of the microcontroller system 100 is selected for testing. In a first iteration, for example, a basic configuration with all optional parameters or functions disabled may be tested. In each subsequent iteration, one or more optional functions or parameters are enabled for testing a new combination of configuration and operating mode. It is appreciated that the total number of configurations may become rather large if each operation feature or function is evaluated independently from the other features or functions. Instead, certain optional features and functions may be grouped together, such as is common for automobiles equipped with predetermined optional packages.

At a next block 304, the microcontroller system 100 (or an equivalent test model thereof) is activated and placed in a first (or next) applicable operating mode (e.g., normal low power, standby, sleep, etc.) while executing a selected version of authorized code. It is noted that testing may be performed again if and when the authorized code is updated to a newer version.

At next block 306, the microcontroller system 100 is run in the selected configuration and in the selected operating mode while adjusting one or more operating conditions over time within expected or operating limit ranges. The adjustments are selected and varied in an attempt to determine a normal aspect value and an expected or maximum deviation aspect values or to determine at least one threshold aspect value (such as a minimum threshold aspect value, a maximum threshold aspect value, or a combination of both) for expected operation of the system.

At next block 308, while running the microcontroller system 100 and adjusting operating conditions, the operating variables (e.g., current, voltage, temperature, time, mode, etc.) are sampled and stored along with any variable ranges or statistical information that may be useful for analysis.

At next block 310, it is queried whether there is another operating mode that should be tested for the given configuration. If so, operation loops back to block 304 in which the microcontroller system 100 is activated in the next applicable operating mode for the selected version of the authorized code. Operation is repeated in which additional operating variable values are sampled and stored along with other information for the new operating mode. Operation loops between blocks 304 - 310 for each applicable operating mode.

When all applicable operating modes have been tested for the given configuration, operation advances instead to block 312 in which it is queried whether a different configuration should be tested. If so, operation loops back to block 302 in which the next configuration of the microcontroller system 100 is selected, such as by enabling one or more additional optional features or functions, and then operation loops again between blocks 304 - 310 for each operating mode of the next selected configuration of the microcontroller system 100.

When such empirical testing is completed for each operating mode for each configuration, operation advances to block 314 in which the stored testing information is analyzed. In particular, the stored operating variable samples, variable ranges, and any other statistical information is analyzed for each of the multiple operating aspects, in which each operating aspect is associated with at least one of the operating variables that were monitored during testing. Corresponding "predetermined" operating aspect values are determined based on the collective test information for each operating mode and configuration combination for the selected version of the authorized application. The predetermined operating aspect values may include normal and deviation aspect values (within an expected or maximum range of normal operation), such as those shown in FIG. 2, or may include one or more threshold aspect values, such as a minimum threshold aspect value, a maximum threshold aspect value, or both.

At next block 316, the predetermined operating aspect values for each of the operating aspects for each operating mode and configuration combination are stored into the behavior profile 150 for the selected version of the authorized application, and operation is completed. The behavior profile 150 may then be stored into the security PMIC 104 (or other suitable memory location). It is noted that the entire test procedure may be repeated at a later time if and when the authorized application is updated for generating an updated behavior profile 150 for an updated version. An authorized entity may remotely access the microcontroller system 100 via the external communication circuitry 108 and perform any updates, including updating any one or more of the behavior profile 150, and any configurable parameters or firmware or the like of the OVM 140 and the security circuitry 144 of the security PMIC 104.

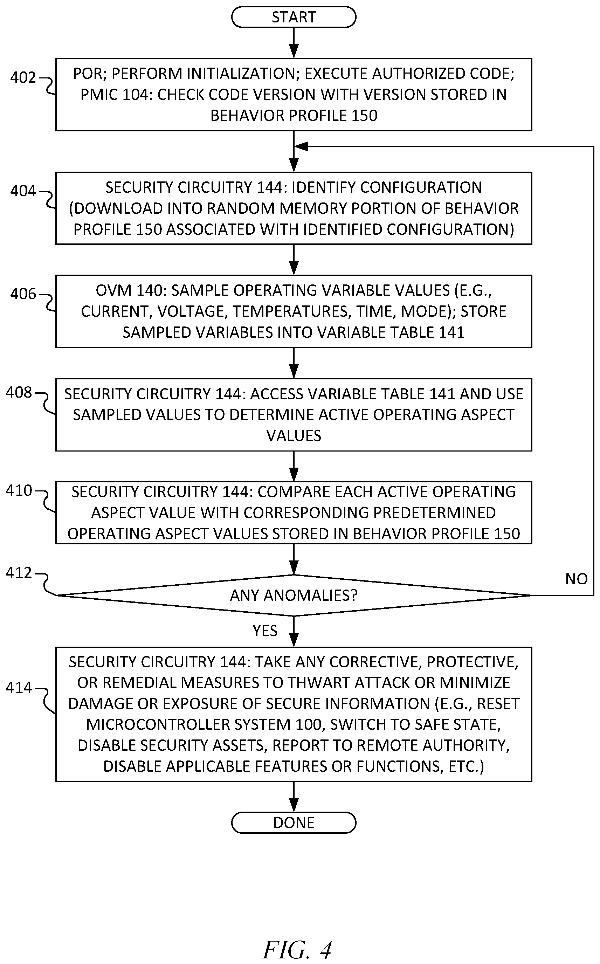

FIG. 4 is a flowchart diagram illustrating operation of the security PMIC 104 for detecting and responding to a security threat to the microcontroller system 100 according to one embodiment. At a first block 402, upon power-up or reset or restart (POR) of the microcontroller system 100, the MCU 102 begins executing authorized code. In one embodiment, the security PMIC 104 may check the version of the authorized code being executed by the MCU 102 and compare with corresponding authorized version stored in the behavior profile 150. Although not specifically shown, if for any reason the version numbers do not match, the security PMIC 104 may prompt the MCU 102 for downloading an update from a remote authority via the external communication circuitry 108, including downloading an updated behavior profile 150 if applicable.

At next block 404, the security circuitry 144 identifies the applicable configuration of the MCU 102 and the microcontroller system 100, including detection of any applicable features and functions as previously described. In one embodiment, the security circuitry 144 may download the behavior profile 150 into a local random access memory (not shown) within the security PMIC 104 or within the security circuitry 144 for quick access and optimal performance. Alternatively, the security circuitry 144 may download only the applicable portion of the behavior profile 150 associated with the active configuration.

At next block 406, the OVM 140 samples operating variable values (e.g., current, voltage, one or more temperatures, time, operating mode, etc.) and stores the sampled values into the variable table 141. As previously described, each new row of the variable table 141 includes a new set of sampled variable values to accumulate multiple rows of corresponding operating variable information over time.

At next block 408, the security circuitry 144 accesses the variable table 141 and uses the sampled values to determine "active" operating aspect values, meaning those aspect values that are determined on-the-fly during operation of the microcontroller system 100.

At next block 410, the security circuitry 144 compares each active operating aspect value with corresponding predetermined operating aspect values stored in the behavior profile 150. For example, the security circuitry 144 compares each active operating aspect value with a corresponding predetermined normal operating aspect value from the behavior profile 150 to determine whether the active operating aspect value deviates from the normal value by more than the corresponding deviation value for determining any anomalies. Alternatively, the security circuitry 144 compares each active operating aspect value with at least one of corresponding predetermined minimum and maximum threshold values.

At next block 412, it is queried whether there are any anomalies, meaning whether at least one active operating aspect value deviates from the normal value by more than the corresponding deviation value, or exceeds a predetermined minimum threshold or a predetermined maximum threshold. If not, operation loops back to block 404, and operation resumes by continuously monitoring, sampling, and storing operating variables, and by continuously determining active operating aspect values and comparing with corresponding stored predetermined operating aspect values.

If instead it is determined at block 412 that there is at least one anomaly, then operation advances instead to block 414, in which the security circuitry 144 takes any corrective, protective, or remedial measures to thwart a potential attack or otherwise minimize damage or exposure of secure information. Such measures may include, for example, resetting the microcontroller system 100, switching the microcontroller system 100 to a safe or secure state, disabling security assets, reporting the attack to a remote authority (via the external communication circuitry 108), disabling applicable features or functions, etc.

The microcontroller system 100 illustrated in FIG. 1 shows a single power domain with one MCU voltage and one MCU current. The microcontroller system 100 may be extended, however, to include multiple power domains, such as multiple buck converters or core supplies providing multiple different voltage values and corresponding current paths to each of two or more cores or other domain circuitry. In this manner, the operating aspects may include power values for each of multiple different power domains.

The security circuitry 144 may be implemented in any one of multiple different manners depending upon the implementation and application. In one embodiment, the security circuitry 144 may be implemented using a basic software routine. In another embodiment, the security circuitry 144 may be implemented by a security state machine. In other higher cost embodiments, the security circuitry 144 may incorporate machine learning capable of analyzing the operating variable values with a greater level of sophisticated statistical analysis over time for more accurately detecting anomalies.

The behavior profile 150 may be updated over time to accommodate other reasons for behavior changes or modifications, such as aging of the circuitry of the microcontroller system 100 including aging of the MCU 102 and other supporting circuitry. In addition or in the alternative, the security circuitry 144 may be configured to track overall elapsed time as well as total operating time and compensate for aging and other factors. Machine learning configurations may also be suitable for making suitable adjustments over time.

A microcontroller system including an MCU and power management circuitry. The power management circuitry includes monitoring circuitry and security circuitry. The monitoring circuitry monitors operating variables associated with the MCU (e.g., current, voltage, time, temperature of the MCU or the power management circuitry, etc.), and stores corresponding active operating variable values over time. The security circuitry determines active operating aspect values each associated with at least one of the monitored operating variables. The security circuitry further compares each of the active operating aspect values with at least one of a corresponding one or more of predetermined operating aspect values stored within a behavior profile for detecting at least one operating anomaly of the MCU. Each predetermined operating aspect value stored in the behavior profile includes at least one threshold value indicative of expected behavior.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A microcontroller system, comprising:
a microcontroller (MCU); and
power management circuitry, comprising:
monitoring circuitry configured to monitor a plurality of operating variables associated with operating behavior of the MCU, including at least one voltage variable, at least one current variable, and at least one temperature variable, and to store a corresponding plurality of active operating variable values over time; and
security circuitry configured to determine a plurality of active operating aspect values each associated with at least one of the plurality of monitored operating variables, and to compare each of the plurality of active operating aspect values with at least one of a corresponding one or more of a plurality of predetermined operating aspect values stored within a behavior profile for detecting at least one operating anomaly of the MCU.

2. The microcontroller system of claim 1, wherein one of the plurality of active operating aspect values comprises an active power level value of the MCU calculated by the security circuitry using at least one voltage variable value and at least one current variable value, and wherein the security circuitry is configured to compare the calculated active power level value with at least one predetermined power level value stored within the behavior profile.

3. The microcontroller system of claim 2, wherein the calculated active power level value and the predetermined power level value are each associated with a selected one of a peak power level value of the MCU, an average power level of the MCU, and an elapsed operating time of the MCU at a specific power level.

4. The microcontroller system of any preceding claim, wherein one of the plurality of active operating aspect values comprises an active versus idle time ratio value of the MCU, and wherein the security circuitry is configured to compare the active versus idle time ratio value of the MCU with at least one predetermined active versus idle time ratio value stored in the behavior profile.

5. The microcontroller system of any preceding claim, wherein the security circuitry is configured to compare an active operating temperature value with at least one predetermined operating temperature value stored in the behavior profile.

6. The microcontroller system of claim 5, wherein the active operating temperature value and the at least one predetermined operating temperature value are each associated with a selected one of operating temperature of the power management circuitry and operating temperature of the MCU.

7. The microcontroller system of any preceding claim, wherein the plurality of operating variables comprises operating current of the MCU, operating voltage of the MCU, operating time, operating temperature of the MCU, and operating temperature of the power management circuitry.

8. The microcontroller system of any preceding claim, wherein the security circuitry is configured to perform at least one of the following actions when at least one operating anomaly is detected, including resetting the MCU, disabling security logic of the MCU, switching the microcontroller system to a safe state, and disabling at least one feature the microcontroller system.

9. The microcontroller system of any preceding claim, wherein the plurality of predetermined operating aspect values stored within the behavior profile includes at least one predetermined operating aspect threshold value for at least one of the active operating aspect values.

10. The microcontroller system of any preceding claim, wherein the plurality of predetermined operating aspect values stored within the behavior profile includes at least one predetermined operating aspect value for each of one or more configurations of the microcontroller system at each of one or more operating modes of the MCU.

11. The microcontroller system of any preceding claim, wherein the security circuitry incorporates machine learning circuitry configured to analyze the plurality of operating variables over time and to adjust at least one of the plurality of predetermined operating aspect values stored within the behavior profile.

12. A method of detecting a security breach by power management circuitry in a microcontroller system comprising a microcontroller (MCU) and the power management circuitry, comprising:
monitoring a plurality of operating variables associated with operating behavior of the MCU, including at least one voltage variable, at least one current variable, and at least one temperature variable;
storing a plurality of active operating variable values indicative of the monitored active operating variables over time;
determining a plurality of active operating aspect values each associated with at least one of the plurality of monitored operating variables; and
comparing each of the plurality of active operating aspect values with at least one of a corresponding one or more of a plurality of predetermined operating aspect values stored within a behavior profile for detecting at least one operating anomaly of the MCU.

13. The method of claim 12, further comprising:
calculating an active power level value of the MCU using at least one voltage variable value and at least one current variable value; and
comparing the calculated active power level value with at least one predetermined power level value stored within the behavior profile.

14. The method of claim 13, wherein the calculated active power level value and the predetermined power level value are each associated with a selected one of a peak power level value of the MCU, an average power level of the MCU, and an elapsed operating time of the MCU at a specific power level.

15. The method of any of claims 12 to 14, further comprising:
determining operating time of the MCU and elapsed time;
determining an active versus idle time ratio value of the MCU; and
comparing the determined active versus idle time ratio value of the MCU with at least one predetermined active versus idle time ratio value stored in the behavior profile.

## Amended claims

### Amended claims in accordance with Rule 137(2) EPC.

1. A microcontroller system, comprising:
a microcontroller (MCU); and
power management circuitry, comprising:
monitoring circuitry configured to monitor a plurality of operating variables associated with operating behavior of the MCU, including at least one voltage variable, at least one current variable, and at least one temperature variable, and to store a corresponding plurality of active operating variable values over time; and
security circuitry configured to determine a plurality of active operating aspect values each associated with at least one of the plurality of monitored operating variables, and to compare each of the plurality of active operating aspect values with at least one of a corresponding one or more of a plurality of predetermined operating aspect values stored within a behavior profile for detecting at least one operating anomaly of the MCU, wherein one of the plurality of active
operating aspect values comprises an active power level value of the MCU calculated by the security circuitry using at least one voltage variable value and at least one current variable value, and wherein the security circuitry is configured to compare the calculated active power level value with at least one predetermined power level value
stored within the behavior profile, wherein the security circuitry is configured to determine whether the calculated active power level value deviates from a normal value by more than a corresponding deviation value in order to determine the presence of at least one operating anomaly of the MCU.

2. The microcontroller system of claim 1, wherein the calculated active power level value and the predetermined power level value are each associated with a selected one of a peak power level value of the MCU, an average power level of the MCU,
and an elapsed operating time of the MCU at a specific power level.

3. The microcontroller system of any preceding claim, wherein one of the plurality of active operating aspect values comprises an active versus idle time ratio value of the MCU, and wherein the security circuitry is configured to compare the active versus idle time ratio value of the MCU with at least one predetermined active versus idle time ratio value stored in the behavior profile.

4. The microcontroller system of any preceding claim, wherein the security circuitry is configured to compare an active operating temperature value with at least one predetermined operating temperature value stored in the behavior profile.

5. The microcontroller system of claim 4, wherein the active operating temperature value and the at least one predetermined operating temperature value are each associated with a selected one of operating temperature of the power management circuitry and operating temperature of the MCU.

6. The microcontroller system of any preceding claim, wherein the plurality of operating variables comprises operating current of the MCU, operating voltage of the MCU, operating time, operating temperature of the MCU, and operating temperature of the power management circuitry.

7. The microcontroller system of any preceding claim, wherein the security circuitry is configured to perform at least one of the following actions when at least one operating anomaly is detected, including resetting the MCU, disabling security logic of the MCU, switching the microcontroller system to a safe state, and disabling at least one feature the microcontroller system.

8. The microcontroller system of any preceding claim, wherein the plurality of predetermined operating aspect values stored within the behavior profile includes at least one predetermined operating aspect threshold value for at least one of the active operating aspect values.

9. The microcontroller system of any preceding claim, wherein the plurality of predetermined operating aspect values stored within the behavior profile includes at least one predetermined operating aspect value for each of one or more configurations of the microcontroller system at each of one or more operating modes of the MCU.

10. The microcontroller system of any preceding claim, wherein the security circuitry incorporates machine learning circuitry configured to analyze the plurality of operating variables over time and to adjust at least one of the plurality of predetermined operating aspect values stored within the behavior profile.

11. A method of detecting a security breach by power management circuitry in a microcontroller system comprising a microcontroller (MCU) and the power management circuitry, comprising:
monitoring a plurality of operating variables associated with operating behavior of the MCU, including at least one voltage variable, at least one current variable, and
at least one temperature variable;
storing a plurality of active operating variable values indicative of the monitored active operating variables over time;
determining a plurality of active operating aspect values each associated with at least one of the plurality of monitored operating variables; and
comparing each of the plurality of active operating aspect values with at least one of a corresponding one or more of a plurality of predetermined operating aspect values stored within a behavior profile for detecting at least one operating anomaly of the MCU, wherein the method further comprises:
calculating an active power level value of the MCU using at least one voltage variable value and at least one current variable value; and
comparing the calculated active power level value with at least one predetermined power level value stored within the behavior profile, wherein the method further comprises determining whether the calculated active power level value deviates from a normal value by more than a corresponding deviation value in order to determine the presence of at least one operating anomaly of the MCU.

12. The method of claim 11, wherein the calculated active power level value and the predetermined power level value are each associated with a selected one of a peak power level value of the MCU, an average power level of the MCU, and an elapsed operating time of the MCU at a specific power level.

13. The method of any of claims 11 to 12, further comprising:
determining operating time of the MCU and elapsed time; determining an active versus idle time ratio value of the MCU; and
comparing the determined active versus idle time ratio value of the MCU with at least one predetermined active versus idle time ratio value stored in the behavior profile.
